# EUROPÄISCHE PATENTSCHRIFT

(11) **EP 3 043 953 B1**
(45) Veröffentlichungstag und Bekanntmachung des Hinweises auf die Patenterteilung: **21.06.2017**
(21) Anmeldenummer: 15747439.6
(22) Anmeldetag: 31.07.2015
(51) Int. Cl.: B60J 10/35, B23P 19/04, B60J 10/00

(54) **VERFAHREN UND VORRICHTUNG ZUR BESTIMMUNG DER DEHNUNG UND/ODER STAUCHUNG EINES DICHTUNGSPROFILS**
METHOD AND DEVICE FOR DETERMINING THE ELONGATION AND/OR COMPRESSION OF A PROFILED SEALING ELEMENT
PROCÉDÉ ET DISPOSITIF DE DÉTERMINATION DE L'ALLONGEMENT ET/OU DE LA COMPRESSION D'UN PROFILÉ D'ÉTANCHÉITÉ

(30) Priorität: 26.08.2014 DE 102014112185
(43) Veröffentlichungstag der Anmeldung: 20.07.2016
(73) Patentinhaber: Grohmann Engineering GmbH, 54595 Prüm (DE)
(72) Erfinder: GROHMANN, Klaus, 54597 Hersdorf (DE); KOTZ, Lothar, 54595 Prüm (DE); GILLES, Michael, 56761 Müllenbach (DE)
(74) Vertreter: Kohlmann, Kai
(86) Internationale Anmeldenummer: PCT/EP2015/067662
(87) Internationale Veröffentlichungsnummer: WO 2016/030131

(56) Entgegenhaltungen:
- EP-A1- 1 902 813
- EP-A2- 0 894 563
- WO-A1-2006/111489
- DE-A1-102006 032 138

## Beschreibung

Die Erfindung betrifft ein Verfahren zur Bestimmung der Dehnung und/oder Stauchung von einem an einer Karosserie oder einem Karosserieteil eines Fahrzeugs applizierten selbstklebenden Dichtungsprofils sowie eine Vorrichtung zur Durchführung des Verfahrens.

Dichtungsprofile an Fahrzeugen oder Fahrzeugteilen dienen dazu, ein bewegliches Fahrzeugteil, beispielsweise eine Fahrzeugtür, im geschlossenen Zustand gegenüber dem Karosserierahmen abzudichten. Aus der DE 10 2006 032 138 A1 sind die Merkmale der Oberbegriffe der Ansprüche 1 und 12 bekannt.

Aus der DE 101 38 781 A1 ist ein Verfahren und eine Vorrichtung zur Anbringung eines Dichtungsprofils an einer Fahrzeugtür bekannt, bei dem das auf einer Rolle als Endlos-Profil vorliegende, selbstklebende Dichtungsprofil von der Rolle abgezogen und mit einer an dem Dichtungsprofil vorhandenen Klebefläche entlang einer für die Anbringung vorgesehenen Linie an der Tür umlaufend aufgerollt wird. Unter dem Begriff "aufgerollt" wird dabei verstanden, dass das Dichtungsprofil mit Hilfe einer Applikationsrolle sukzessiv an der Fläche der Fahrzeugtür einer vorgegebenen Montagelinie folgend angedrückt und dabei angebracht wird. Der Vorteil dieses Roll-Verfahrens besteht darin, dass es die vollständige Anbringung einer Dichtung in einem fortlaufenden Arbeitsgang ermöglicht. Die Anbringung erfolgt dadurch, dass die Karosserie oder das Karosserieteil und die Applikationsrolle mit einer Relativ-Geschwindigkeit zueinander bewegt werden. Dabei spielt es keine Rolle, ob die Fahrzeugkarosserie oder das Teil der Karosserie gegenüber einer stationär gelagerten Applikationsrolle bewegt wird oder ob die Applikationsrolle gegenüber der stationär gehalterten Fahrzeugkarosserie oder dem stationär gehalterten Teil der Fahrzeugkarosserie bewegt wird.

Bei dem zu applizierenden Dichtungsprofil handelt es sich um ein so genanntes selbstklebendes Endlos-Dichtungsprofil. An einer der Applikationsfläche zugewandten Seite weist das Dichtungsprofil eine Klebefläche, insbesondere in Form eines Klebebandes auf. Die Klebefläche ist mit einem Schutzstreifen, insbesondere einer Schutzfolie, dem sogenannten Liner, bedeckt. Der Schutzstreifen wird kurz vor der Applikation abgezogen. Hierdurch wird die Klebefläche frei gegeben.

Abhängig von der Geometrie des Karosserieteils, insbesondere der Türgeometrie, muss das applizierte Dichtungsprofil entlang einer Applikationsstrecke mit definierter Länge eine vorgegebene Dehnung/Stauchung aufweisen, damit eine dauerhafte Verbindung mit dem Karosserieteil gewährleistet ist. Bei komplexen Geometrien kann das Dichtungsprofil entlang mehrerer hintereinander angeordneter Applikationsstrecken in einem Arbeitsgang appliziert werden, wobei das Türdichtungsprofil in den unterschiedlichen Applikationsstrecken eine unterschiedliche Dehnung bzw. Stauchung aufweisen muss.

Um eine Dehnung oder Stauchung des aufgeklebten Dichtungsprofils gezielt herbeizuführen, kann das Dichtungsprofil mit einer erhöhten oder verlangsamten Fördergeschwindigkeit in Richtung der Applikationsrolle gefördert werden. Außerdem kann durch Einstellen der Bewegungsgeschwindigkeit des Roboterarms, der entweder das Karosserieteil längs der stationären Applikationsrolle oder die bewegliche Applikationsrolle gegenüber dem stationären Karosserieteil handhabt, gezielt die Relativ-Geschwindigkeit zwischen Applikationsrolle und Karosserieteil beeinflusst werden, um eine Dehnung bzw. Stauchung in dem Dichtungsprofil herbeizuführen.

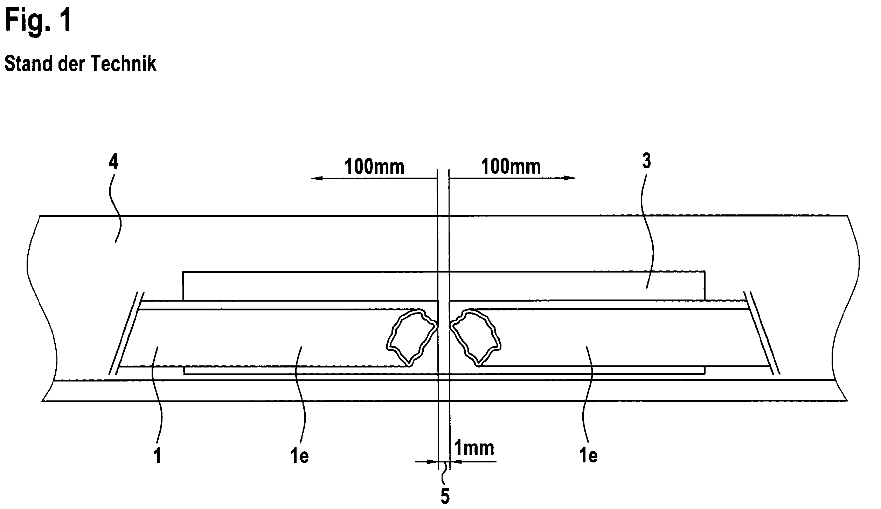

Im Stand der Technik wird die Dehnung und/oder Stauchung des applizierten Dichtungsprofils mit dem so genannten Schnitttest wie folgt gemessen (vergleiche **Figur 1**):
- Das Dichtungsprofil (1) wird an einem Test-Karosserieteil (4) außerhalb der laufenden Produktion appliziert.
- Das applizierte Dichtungsprofil (1) wird an wenigstens einer, vorzugsweise mehreren Stellen mit einem scharfen Messer quer zur Längserstreckung durchtrennt.
- Zu beiden Seiten des Schnittes wird das Dichtungsprofil (1) auf einer Länge von 100 mm von der Applikationsfläche des Karosserieteils gelöst.
- Die Klebeflächen der abgelösten Teile des Dichtungsprofils (1) werden mit weichem Papier (3) abgedeckt, so dass die abgelösten Teile des Türdichtungsprofils nicht wieder an der Applikationsfläche ankleben.
- Nach einer Entspannungsphase von bis zu 15 Minuten wird eine eventuell vorhandene Dehnung/Stauchung in dem Dichtungsprofil (1) dadurch sichtbar, dass sich zwischen den beiden Enden des getrennten Dichtungsprofils (1) beim Zusammenlegen ein Spalt zeigt (Dehnung) oder die beiden Enden sich beim Zusammenlegen gegenseitig abstützen (Stauchung).
- Das Spaltmaß (5) bzw. die Stauchung wird mit einer Schieblehre gemessen.

Diese bekannte, stichprobenartige und zerstörende Messung an den Dichtungsprofilen an Testtüren erlaubt keine vollständige Kontrolle des Applikationsverfahrens. Hieraus resultiert eine Detektionsunschärfe zwischen zwei zerstörenden Prüfungen. Des Weiteren können durch die notwendige Verwendung von Testtüren im Rahmen der Stichprobe nicht alle möglichen Fehlerbilder detektiert werden. Weicht beispielsweise die Oberfläche der für die Stichprobe ausgewählten Testtür von der Tür im laufenden Produktionsprozess ab, so können aus diesen Abweichungen resultierende Dehnungen und/oder Stauchungen nicht detektiert werden. Schließlich führen die Unterbrechung der Produktion zur Einschleusung der Testtüren sowie die nachgelagerte Messung der Dehnung und/oder Stauchung zu einer Produktionsunterbrechung.

Ausgehend von diesem Stand der Technik liegt der Erfindung die Aufgabe zu Grunde, ein Verfahren zur Bestimmung der Dehnung und/oder Stauchung von einem an einer Karosserie oder einem Karosserieteil eines Fahrzeugs applizierten, selbstklebenden Dichtungsprofil zu schaffen, das eine fortlaufende Bestimmung der Dehnung und/oder Stauchung an sämtlichen applizierten Dichtungsprofilen zerstörungsfrei und ohne Betriebsunterbrechung sowie insbesondere ohne Personal- und Materialeinsatz ermöglicht. Außerdem soll eine Vorrichtung zur Durchführung des Verfahrens angegeben werden.

Diese Aufgabe wird durch ein Verfahren mit den Merkmalen des Anspruchs 1 sowie eine Vorrichtung zur Durchführung des Verfahrens mit den Merkmalen des Anspruchs 12 gelöst.

Im geringen Abstand vor dem Antriebssystem für das Dichtungsprofil befindet sich die Messrolle, die schlupffrei auf dem Dichtungsprofil abrollt. Durch diese Anordnung der Messrolle sowie das schlupffreie Abrollen auf dem Dichtungsprofil entspricht die von der Messrolle des Meßwertaufnehmers erfasste Länge der Länge des auf dem Karosserieteil bzw. der Karosserie applizierten Dichtungsprofils entlang der Applikationsstrecke mit definierter Länge.

Ist die gemessene Länge länger als die Applikationsstrecke, liegt eine Stauchung des Dichtungsprofils vor. Ist die gemessene Länge kürzer als die Applikationsstrecke, liegt eine Dehnung des Dichtungsprofils vor.

Der Messwertaufnehmer umfasst neben der Messrolle einen Encoder, der die Rotation der Messrolle in elektrische Signale umsetzt. Derartige Encoder können als optische, magnetische oder mechanische Geber ausgestaltet sein, die die aktuelle Position der Welle der Messrolle erkennen und als elektrisches Signal ausgeben. Die Messrolle und der Encoder können entkoppelt beispielsweise über eine biegsame Welle miteinander verbunden sein. Encoder und Messrolle können jedoch auch als Baueinheit ausgeführt sein.

Für eine spannungsfreie Dichtungsapplikation entspricht die Soll-Länge des in der Applikationsstrecke zu applizierenden Dichtungsprofils der Applikationsstrecke. Für eine gedehnte Montage der Dichtung ist die Soll-Länge kleiner als die Applikationsstrecke. Für eine gestauchte Montage der Dichtung ist die Soll-Länge größer als die Applikationsstrecke. Um abhängig von einem vorgegebenen Spannung der applizierten Dichtung entlang einer Applikationsstrecke eine davon abweichende Dehnung und/oder Stauchung zu erfassen, wird nach Beendigung des Applizierens des Dichtungsstreifens entlang der Applikationsstrecke die gemessene Länge des aus dem Speicher abgezogenen Dichtungsprofils mit der Soll-Länge des in der Applikationsstrecke zu applizierenden Dichtungsprofils verglichen, wobei in der Applikationsstrecke eine Stauchung des Dichtungsprofils gegenüber der zur applizierenden Soll-Länge des Dichtungsprofils vorliegt, wenn die gemessene Länge größer als die Soll-Länge ist und in der Applikationsstrecke eine Dehnung des Dichtungsprofils gegenüber der zu applizierenden Soll-Länge des Dichtungsprofils vorliegt, wenn die gemessene Länge kleiner als die Soll-Länge ist.

Der Vergleich der Messwerte mit den Soll-Längen erfolgt automatisiert, insbesondere im Wege elektronischer Datenverarbeitung.

Ergibt der Vergleich, dass die gemessene Länge des abgezogenen Dichtungsprofils größer oder kleiner als die Soll-Länge ist, kann bei Überschreiten eines vorgegebenen Differenzwertes automatisch ein Signal ausgegeben werden. Die Signalisierung kann insbesondere über ein grafisches Benutzerinterface und/oder akustisch ausgegeben werden, um den Werker am Band in der Automobilproduktion über eine unzulässig hohe Stauchung oder Dehnung zu informieren.

Bei komplexen Karosserieteilen bzw. Karosserien und daraus resultierend einem komplexen räumlichen Verlauf der Applikationslinie kann das Dichtungsprofil entlang mehrerer hintereinander angeordnete Applikationsstrecken in einem Arbeitsgang appliziert werden, wobei den einzelnen Applikationsstrecken unterschiedliche Werte für die Dehnung bzw. Stauchung zugeordnet sind. Der Vergleich der gemessenen Länge mit der jeweiligen Soll-Länge erfolgt getrennt für die einzelnen hintereinander angeordneten Applikationsstrecken.

Um in dem Abschnitt des Förderwegs der Applikationsvorrichtung zwischen dem Antriebssystem und der Applikationsrolle eine Stauchung bzw. Dehnung des Dichtungsprofils zu vermeiden, wird das Dichtungsprofil vorzugsweise sowohl durch das Antriebssystem als auch die Applikationsrolle entlang des Förderwegs in gleicher Richtung und mit übereinstimmender Geschwindigkeit gefördert.

Sollte gleichwohl eine Stauchung des Dichtungsprofils zwischen dem Antriebssystem und der Applikationsrolle stattfinden, kommt es üblicherweise in diesem Abschnitt zu einer Schlaufenbildung des Dichtungsprofils. Diese Schlaufenbildung kann in vorteilhafter Ausgestaltung der Erfindung zusätzlich von einem Sensor überwacht werden, der eine Schlaufenbildung erkennt. Als Sensor kommt insbesondere ein an dem Applikationskopf angeordneter Lasersensor in Betracht, der eine Änderung des Abstands der Oberfläche des Dichtungsprofils zu dem Sensor detektiert und ggf. das Applizieren des Dichtungsprofils unmittelbar beendet, sofern eine Schlaufe des Dichtungsprofils erkannt wird.

Um Verfälschungen der Messung mit Hilfe der Meßrolle durch Dehnung oder Stauchung des Dichtungsprofils in dem Förderweg zwischen der Messrolle und dem Antriebssystem zu vermeiden, erfolgt das Messen der Länge des aus dem Speicher abgezogenen Dichtungsprofils mit der Messrolle in einem möglichst geringen Abstand von dem Antriebssystem von höchstens 0,25 m, vorzugsweise jedoch von höchstens 0,1 m.

Um das schlupffreie Abrollen der Messrolle und damit eine unverfälschte Längenmessung der Länge des aus dem Speicher abgezogenen Dichtungsprofils zu gewährleisten, wird erfindungsgemäß eine gerändelte Messrolle verwendet. Die am Umfang der Messrolle an dem Rollenmantel angeordnete Rändelung ist derart eingerichtet, dass ein Formschluss zwischen dem Rollenmantel und dem Dichtungsprofil hergestellt wird. Die Rändelung kann zu diesem Zweck beispielsweise eine Vielzahl spitzer Zähne aufweisen, die sich formschlüssig mit dem Dichtungsprofil verzahnen.

Um eine dauerhafte Beschädigung des empfindlichen Dichtungsprofils zu vermeiden, rollt die gerändelte Messrolle vorzugsweise auf dem Schutzstreifen des Dichtungsprofils ab, der erst vor dem Applizieren des Dichtungsprofils in dem Abschnitt des Förderwegs zwischen dem Antriebssystem und der Applikationsrolle abgezogen wird. Die Zähne der Rändelung verzahnen sich ausschließlich mit dem Schutzstreifen und der von dem Schutzstreifen abgedeckten Klebeschicht. Hierdurch wird gewährleistet, dass die auf dem Dichtungsprofil aufgebrachte Schutzschicht, insbesondere ein Gleitlack, nicht beschädigt wird. Das ausschließliche Abrollen der Messrolle auf dem Schutzstreifen führt zu einer völlig beschädigungsfreien Messung, die in der Produktion eine kontinuierliche Messung und damit Detektion sämtlicher Fehlerbilder bezüglich der Dehnung oder Stauchung der applizierten Dichtungsprofile ermöglicht.

Nachfolgend werden das erfindungsgemäße Verfahren und insbesondere eine Vorrichtung zur Durchführung des Verfahrens anhand der Figuren näher erläutert. Es zeigen:
- **Figur 2**: eine Gesamtansicht eines Roboter-geführten Applikationskopfes einer Applikationsvorrichtung,
- **Figur 3**: eine Seitenansicht eines Messwertaufnehmers umfassend eine Messrolle sowie

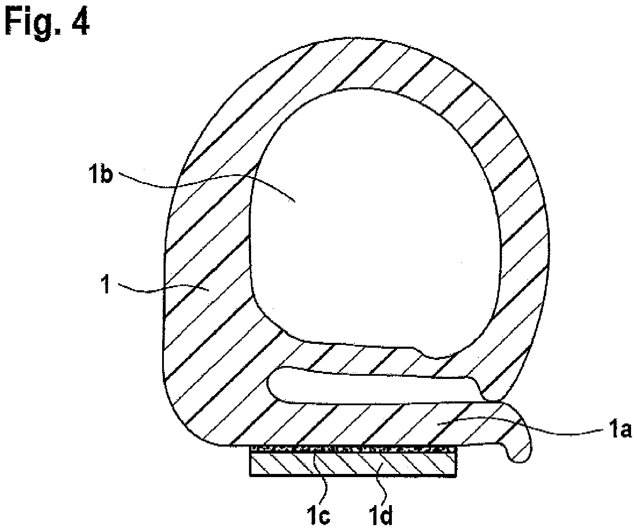

- **Figur 4**: eine Schnittdarstellung eine Dichtungsprofils.

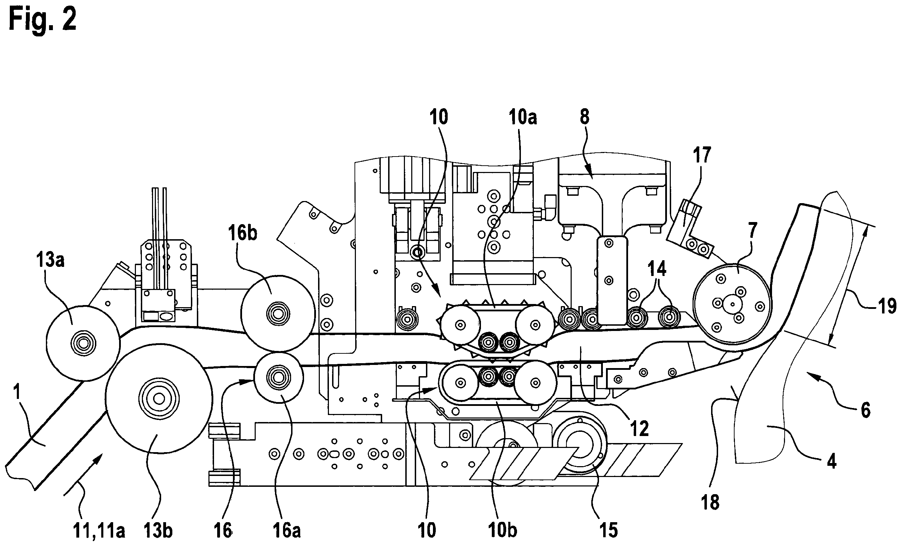

Figur 2 zeigt eine Applikationsvorrichtung (6), die einen Roboter-geführten Applikationskopf (8) mit einer Applikationsrolle (7) aufweist, die zum Aufrollen eines Dichtungsprofils (1) mit einem Klebestreifen (1c) an einem Karosserieteil (4) eines Fahrzeugs versehen ist.

Bei dem Dichtungsprofil (1) handelt es sich um ein selbstklebendes Dichtungsprofil. Das Dichtungsprofil (1) umfasst eine Lippe (1a) und eine Hohlkammer (1b). An der der Hohlkammer (1b) abgewandten Seite der Lippe (1a) ist der Klebestreifen (1c) angebracht, mit dem das Dichtungsprofil (1) an dem Karosserieteil (4), insbesondere einer Tür, angeklebt wird. Der Klebestreifen (1c) ist zunächst mit einem Schutzstreifen (1d) versehen, der kurz vor der Applikation mit der Applikationsrolle (7) von dem Klebestreifen (1c) abgezogen wird.

Der Applikationskopf (8) weist ferner ein Antriebssystem (10) auf, das zum Abziehen des Dichtungsprofils (1) aus einem nicht dargestellten Speicher und zum Fördern des Dichtungsprofils (1) entlang eines Förderwegs (11) in Richtung der Applikationsrolle (7) eingerichtet ist. Das Antriebssystem (10) umfasst zwei umlaufende Riemen (10a, 10b), die an gegenüberliegenden Seiten der Oberfläche des Dichtungsprofils (1) reibschlüssig zur Anlage bringbar sind.

In Förderrichtung (11a) unmittelbar hinter dem Antriebssystem (10) befindet sich ein Führungskanal (12) für die Zuführung des Dichtungsprofils zu der Applikationsrolle (7). Der Führungskanal (12) wird durch an der Ober- und Unterseite des Dichtungsprofils anliegende obere und untere Führungsrollen sowie an dessen Seiten anliegende seitliche Führungsrollen gebildet. Im Einzelnen wird zum Aufbau des Führungskanals (12) auf die DE 10 2011 050 751 A1 verwiesen, deren Offenbarung ausdrücklich in diese Anmeldung einbezogen wird.

In Förderrichtung (11a) hinter dem Führungskanal (12) befindet sich als weiterer Bestandteil der Führung des Dichtungsprofils (1) eine Rollenanordnung (14), die einem Profilstau an der Applikationsrolle (7) entgegenwirkt. Zum Aufbau dieser Rollenanordnung (14) wird ebenfalls auf die DE 10 2011 050 751 A1 hingewiesen, deren Offenbarungsgehalt ausdrücklich in diese Anmeldung einbezogen wird.

Ferner befinden sich zur Führung des Dichtungsprofils (1) entlang des Förderwegs (11) vom Speicher bis zur Applikationsrolle (7) in Förderrichtung vor dem Antriebssystem (10) an der Ober- und Unterseite des Dichtungsprofils anliegende, untere und obere Führungsrollen (13a, b).

Der Abzug (15) zum Abziehen des Schutzstreifens (1d) von dem Klebestreifen (1c) des Dichtungsprofils (1) ist entlang des Förderwegs (11) zwischen dem Antriebssystem (10) und der Applikationsrolle (7) angeordnet. Der Abzug umfasst insbesondere eine angetrieben Abzugsrolle, die im Ausführungsbeispiel unterhalb des Förderwegs (11) zwischen dem Antriebssystem (10) und der Applikationsrolle (7) an dem Applikationskopf (8) angeordnet ist und über die der Schutzstreifen (1d) geführt ist.

Weiter ist an dem Applikationskopf (8) in Förderrichtung (11a) des Dichtungsprofils (1) vor dem Antriebssystem (10) ein Messwertaufnehmer (16) angeordnet. Der Messwertaufnehmer (16) umfasst eine schlupffrei auf dem Dichtungsprofil (1) abrollende Messrolle (16a), eine ein Gegenlager zu der Messrolle (16a) bildende Führungsrolle (16b) sowie einen Encoder, der die Umdrehungen der Welle der Messrolle (16a) in elektrische Signale umsetzt. Ferner umfasst der Meßwertaufnehmers (16) einen in Richtung der Führungsrolle (16b) und damit in Richtung des Dichtungsprofils (1) wirkenden Antrieb (16d), insbesondere in Form eines pneumatischen Zylinders. Der Antrieb (16d) ist vorzugsweise derart gesteuert, dass die Messrolle (16a) mit einer konstanten Kraft gegen das Dichtungsprofil (1) gedrückt wird. Alternativ kann die Messrolle (16a) an einem federbelasteten Andruckhebel gelagert sein. Dabei belastet die Feder den um eine Achse verschwenkbar an dem Applikationskopf gelagerten Hebel in Richtung des Dichtungsprofils (1) bzw. der Führungsrolle (16b) auf der gegenüberliegenden Seite des Dichtungsprofils (1).

Um ein einwandfreies Abrollen der Messrolle (16a) auf der Oberfläche des Schutzstreifens (1d) des Dichtungsprofils (1) zu gewährleisten, ist die Führungsrolle nach Art einer Scheibenspule ausgebildet, wobei die über den zylindrischen Kern überstehenden, stirnseitig angeordneten Scheiben an den Seitenflanken des Dichtungsprofils (1) zur Anlage gelangen. Die Führungsrolle (16b) bildet durch diese Ausführungsform zusammen mit der Messrolle (16a) einen Führungskanal, durch den das Dichtungsprofil (1) allseitig geführt hindurch läuft. Der Kern und die Scheiben der Führungsrolle (18b) sind glattflächig ausgebildet, um eine Beschädigung der Oberfläche des Dichtungsprofils (1) zu vermeiden.

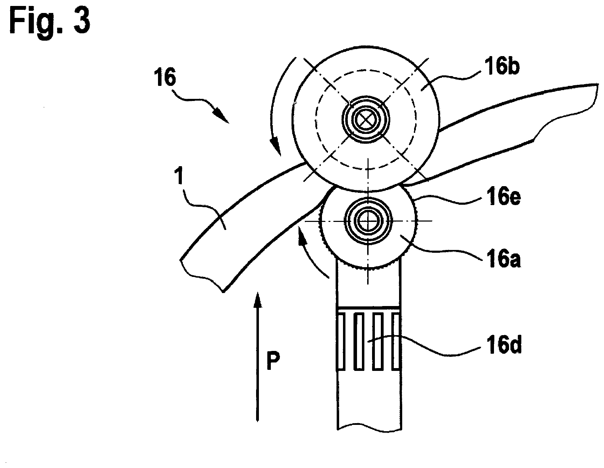

Die Messrolle (16a) verfügt indes, wie dies insbesondere aus der Abbildung nach Figur 3a erkennbar ist, über eine am Umfang der Messrolle (16a) angeordnete Rändelung, die derart ausgestaltet ist, dass ein Formschluss zwischen der Rändelung und dem Schutzstreifen (1d) des Dichtungsprofils (1) hergestellt wird. Hierzu weist die Rändelung (16e) eine Vielzahl von sich radial nach außen erstreckenden spitzen Zähnen auf, die sich in dem Schutzstreifen (1d) verzahnen.

Durch dieses schlupffreie Abrollen der Messrolle (16a) auf dem Dichtungsprofil (1) entspricht die von dem Meßwertaufnehmer (16) gemessene Länge der tatsächlich auf dem Karosserieteil (4) applizierten Länge des Dichtungsprofils (1). Wird nun erfindungsgemäß der Applikationskopf (8) mit der Applikationsrolle (7) entlang der für die Anbringung des Dichtungsprofils (1) vorgesehenen Applikationsstrecke (19) bewegt, zieht das Antriebssystem (10) das Dichtungsprofil aus einem Speicher mit einer für die Applikationsstrecke (19) vorgesehenen Geschwindigkeit ab und fördert dieses in Richtung der Applikationsrolle (7). Hierdurch wird die Welle der Messrolle (16a) in Drehung versetzt und die Drehung zum Encoder übertragen. Das von dem Encoder aus der Drehung der Welle ermittelte Signal, wird in einer Steuerung der Applikationsvorrichtung (6) derart verarbeitet, dass nach Beendigung des Applizierens des Dichtungsstreifens (1) entlang der Applikationsstrecke (19) die gemessene Länge des aus dem Speicher abgezogenen Dichtungsprofils (1) mit einer Soll-Länge des in der Applikationsstrecke (19) zu applizierenden Dichtungsprofils verglichen wird. Die Soll-Länge kann exakt der Länge der Applikationsstrecke (19) entsprechen. In diesem Fall ist eine spannungsfreie Applikation des Dichtungsprofils erwünscht. Die Soll-Länge kann jedoch auch größer oder kleiner als die Applikationsstrecke (19) sein, je nachdem, ob eine Stauchung bzw. Dehnung des applizierten Dichtungsprofils (1) in der Applikationsstrecke (19) erwünscht ist. Durch den Vergleich stellt die Steuerung fest, dass eine Stauchung des Dichtungsprofils gegenüber der zu applizierenden Soll-Länge des Dichtungsprofils vorliegt, wenn die gemessene Länge größer als die Soll-Länge ist und dass eine Dehnung des Dichtungsprofils gegenüber der zu applizierenden Soll-Länge des Dichtungsprofils vorliegt, wenn die gemessene Länge kleiner als die Soll-Länge ist. Über optische und/oder akustische Ausgabeeinheiten der Applikationsvorrichtung (6) wird das Ergebnis der Auswertung ausgegeben. Insbesondere können Warnsignale erzeugt werden, sofern gegenüber der Soll-Länge eine zu große Stauchung bzw. Dehnung auftritt.

Um die Antriebsgeschwindigkeit von Antriebssystem (10) und Applikationsrolle (7) aufeinander abzustimmen, sind sowohl die beiden umlaufenden Riemen (10a, 10b) als auch die Applikationsrolle (7) jeweils von einem Servo-Motor angetrieben.

Schließlich wird eine unerwünschte Schlaufenbildung des Dichtungsprofils (1) zwischen dem Antriebssystem (10) und der Applikationsrolle (7) mit Hilfe eines Sensors (17), insbesondere eines Laser-Sensors überwacht.

**Bezugszeichenliste**

| **Nr.** | **Bezeichnung** | **Nr.** | **Bezeichnung** |
|---|---|---|---|
| 1 | Dichtungsprofil | 16 | Meßwertaufnehmer |
| 1a | Lippe | 16a | Messrolle |
| 1b | Hohlkammer | 16b | Führungsrolle |
| 1c | Klebestreifen | 16c | - |
| 1d | Schutzstreifen | 16d | Antrieb |
| 1e | abgelöster Bereich | 16e | Rändelung |
| 2 | Messpunkt | 17 | Lasersensor |
| 3 | Papier | 18 | Applikationsfläche |
| 4 | Karosserieteil (Tür) | 19 | Applikationsstrecke |
| 5 | Spaltmaß | | |
| 6 | Applikationsvorrichtung | | |
| 7 | Applikationsrolle | | |
| 8 | Applikationskopf | | |
| 9 | -- | | |
| 10 | Antriebssystem | | |
| 10a | Riemen | | |
| 10b | Riemen | | |
| 11 | Förderweg | | |
| 11a | Förderrichtung | | |
| 12 | Führungskanal | | |
| 13a, b | Führungsrollen | | |
| 14 | Rollenanordnung | | |
| 15 | Abzug | | |
| | | | |

## Patentansprüche

1. Verfahren zur Bestimmung der Dehnung und/oder Stauchung von einem an einer Karosserie oder einem Karosserieteil (4) eines Fahrzeugs applizierten, selbstklebenden Dichtungsprofil (1) umfassend die Schritte:
- Abziehen des Dichtungsprofils (1) aus einem Speicher und Fördern des Dichtungsprofils (1) entlang eines Förderwegs (11) mit einem Antriebssystem (10) in Richtung einer Applikationsrolle (7),
- Applizieren des Dichtungsprofils (1) mit der Applikationsrolle (7) an der Karosserie oder dem Karosserieteil (4) entlang einer Applikationsstrecke (19)
- Abziehen eines Schutzstreifens (1d) von einer Klebefläche (1c) des selbstklebenden Dichtungsprofils (1) vor dem Applizieren in einem Abschnitt des Förderwegs (11) zwischen dem Antriebssystem (10) und der Applikationsrolle (7),
- Messen der Länge des aus dem Speicher abgezogenen Dichtungsprofils (1) mit einem Meßwertaufnehmer (16) umfassend eine Meßrolle (16a),
**dadurch gekennzeichnet, dass** die Meßrolle (16a) in einem Abschnitt des Förderwegs (11) in Förderrichtung (11a) vor dem Antriebssystem (10) schlupffrei auf dem Dichtungsprofil (1) abrollt.

2. Verfahren nach Anspruch 1, **dadurch gekennzeichnet, dass** nach Beendigung des Applizierens des Dichtungsprofils entlang der Applikationsstrecke (19) die gemessene Länge des aus dem Speicher abgezogenen Dichtungsprofils (1) mit einer Solllänge des in der Applikationsstrecke (19) zu applizierenden Dichtungsprofils (1) verglichen wird, wobei in der Applikationsstrecke eine Stauchung des Dichtungsprofils (1) gegenüber der zu applizierenden Solllänge des Dichtungsprofils (1) vorliegt, wenn die gemessene Länge größer als die Solllänge ist und in der Applikationsstrecke (19) eine Dehnung des Dichtungsprofils (1) gegenüber der zu applizierenden Solllänge des Dichtungsprofils (1) vorliegt, wenn die gemessene Länge kleiner als die Solllänge ist.

3. Verfahren nach Anspruch 2, **dadurch gekennzeichnet, dass** der Vergleich automatisiert, insbesondere im Wege elektronischer Datenverarbeitung erfolgt.

4. Verfahren nach einem der Ansprüche 1 bis 3, **dadurch gekennzeichnet, dass** das Dichtungsprofil (1) entlang mehrerer hintereinander angeordneter Applikationsstrecken (19) in einem Arbeitsgang appliziert wird.

5. Verfahren nach einem der Ansprüche 1 bis 4, **dadurch gekennzeichnet, dass** das Antriebsystem (10) und die Applikationsrolle (7) das Dichtungsprofil (1) entlang des Förderwegs (11) in gleicher Richtung und mit übereinstimmender Geschwindigkeit fördern.

6. Verfahren nach einem der Ansprüche 1 bis 5, **dadurch gekennzeichnet, dass** eine Stauchung des Dichtungsprofils (1) zwischen dem Antriebssystem (10) und der Applikationsrolle (7) mit Hilfe eines Sensors (17) überwacht wird, der eine Schlaufenbildung in dem Abschnitt des Förderwegs (11) zwischen dem Antriebssystem (10) und der Applikationsrolle (7) erkennt.

7. Verfahren nach Anspruch 6, **dadurch gekennzeichnet, dass** das Applizieren des Dichtungsprofils (1) unmittelbar beendet wird, sofern eine Stauchung des Dichtungsprofils (1) zwischen dem Antriebssystem (10) und der Applikationsrolle (7) erkannt wird.

8. Verfahren nach einem der Ansprüche 1 bis 7, **dadurch gekennzeichnet, dass** Messen der Länge des aus dem Speicher abgezogenen Dichtungsprofils (1) mit der Meßrolle in einem Förderwegabstand vor dem Antriebssystem (10) von höchstens 0,25 m erfolgt.

9. Verfahren nach einem der Ansprüche 1 bis 8, **dadurch gekennzeichnet, dass** das Applizieren durch Aufrollen des Dichtungsprofils (1) auf einer Applikationsfläche (18) der Karosserie oder des Karosserieteils (4) mit Hilfe der Applikationsrolle (7) entlang der Applikationsstrecke (19) erfolgt.

10. Verfahren nach einem der Ansprüche 1 bis 9, **dadurch gekennzeichnet, dass** die Meßrolle (16a) auf dem Schutzstreifen (1c) des Dichtungsprofil (1) abrollt.

11. Verfahren nach Anspruch 10, **dadurch gekennzeichnet, dass** eine gerändelte Meßrolle (16a) verwendet wird.

12. Vorrichtung (6) zur Durchführung des Verfahrens nach einem der Ansprüche 1 bis 11, wobei
- die Vorrichtung (6) eine Applikationskopf (8) mit einer Applikationsrolle (7) aufweist, die zum Aufrollen eines Dichtungsprofil (1) mit einer Klebefläche (1c) an einer Karosserie oder einem Karosserieteil (4) eines Fahrzeugs eingerichtet ist,
- die Applikationskopf (8) ein Antriebssystem (10) aufweist, das zum Abziehen des Dichtungsprofils (1) aus einem Speicher und zum Fördern des Dichtungsprofils entlang eines Förderwegs (11) in Richtung der Applikationsrolle (7) eingerichtet ist,
- an dem Applikationskopf (8) entlang des Förderwegs (11) zwischen dem Antriebssystem (10) und der Applikationsrolle (7) ein Abzug zum Abziehen eines Schutzstreifens (1d) von der Klebefläche (1c) des Dichtungsprofils (1) angeordnet ist,
**dadurch gekennzeichnet, dass**
- an dem Applikationskopf (8) in Förderrichtung (11a) des Dichtungsprofils (1) vor dem Antriebssystem (10) eine Meßrolle (16a) eines Meßwertaufnehmers (16) angeordnet ist, die derart eingerichtet ist, dass sie schlupffrei auf dem Dichtungsprofil (1) abrollt und die Länge des aus dem Speicher abgezogenen Dichtungsprofils (1) misst.

13. Vorrichtung nach Anspruch 12, **dadurch gekennzeichnet, dass** die Vorrichtung (6) eine Datenverarbeitungseinheit aufweist, die derart programmiert ist, um nach Beendigung des Applizierens des Dichtungsstreifens (1) entlang der Applikationsstrecke (19) die gemessene Länge des aus dem Speicher abgezogenen Dichtungsprofils (1) mit einer Solllänge des in der Applikationsstrecke (19) zu applizierenden Dichtungsprofils zu vergleichen, wobei in der Applikationsstrecke (19) eine Stauchung des applizierten Dichtungsprofils (1) gegenüber der zu applizierenden Solllänge des Dichtungsprofils vorliegt, wenn die gemessene Länge größer als die Solllänge ist und in der Applikationsstrecke (19) eine Dehnung des applizierten Dichtungsprofils (1) gegenüber der zu applizierenden Solllänge des Dichtungsprofils vorliegt, wenn die gemessene Länge kleiner als die Solllänge ist.

14. Vorrichtung nach Anspruch 12 oder 13, **dadurch gekennzeichnet, dass** das Antriebssystem (10) zwei umlaufende, an der Oberfläche des Dichtungsprofils (1) reibschlüssig zur Anlage bringbare Riemen (10a, 10b) aufweist.

15. Vorrichtung nach einem der Ansprüche 12 bis 14, **dadurch gekennzeichnet, dass** in dem Abschnitt des Förderwegs (11) zwischen dem Antriebssystem (10) und der Applikationsrolle (7) ein Sensor (17) derart angeordnet ist, dass er eine mit einer Stauchung des Dichtungsprofils (1) zwischen dem Antriebssystem (10) und der Applikationsrolle (7) einhergehende Schlaufenbildung des Dichtungsprofils (1) erkennen kann.

16. Vorrichtung nach einem der Ansprüche 12 bis 15, **dadurch gekennzeichnet, dass** die Meßrolle (16a) derart an dem Applikationskopf (8) angeordnet ist, dass sie für ein Abrollen auf dem Schutzstreifen (1d) des Dichtungsprofils eingerichtet ist.

17. Vorrichtung nach einem der Ansprüche 12 bis 16, **dadurch gekennzeichnet, dass** die Meßrolle (16a) eine Rändelung (16e) aufweist.

18. Vorrichtung nach Anspruch 17, **dadurch gekennzeichnet, dass** die Rändelung (16e) eine Vielzahl spitzer Zähen aufweist, die für einen formschlüssigen Eingriff in den Schutzstreifen (1d) des Dichtungsprofils (1) eingerichtet sind.

19. Vorrichtung nach einem der Ansprüche 12 bis 18, **dadurch gekennzeichnet, dass** im Abstand zu der Meßrolle (16a) eine Führungsrolle (16b) derart an dem Applikationskopf (8) angeordnet ist, dass die Führungsrolle (16b) auf der dem Schutzstreifen (1d) abgewandten Seite des Dichtungsprofils (1) abrollt und ein Gegenlager für die Meßrolle (16a) bildet.

20. Vorrichtung nach einem der Ansprüche 12 bis 19, **dadurch gekennzeichnet, dass** die Meßrolle (16a) von einem in Richtung des Dichtungsprofils (1) wirkenden Antrieb (16d) gegen das Dichtungsprofil (1) drückbar ist.

21. Vorrichtung nach einem der Ansprüche 12 bis 18,**dadurch gekennzeichnet, dass** das Antriebssystem (10) und/oder die Applikationsrolle (7) einen Servomotor umfassen.

## Claims

1. A method for determining the elongation and/or compression of a self-adhesive profiled sealing element (1) applied to a body or a body part (4) of a vehicle, comprising the steps:
- drawing the profiled sealing element (1) from a store and conveying the profiled sealing element (1) along a conveying path (11) by means of a drive system (10) in the direction of an application roller (7),
- applying the profiled sealing element (1) to the body or the body part (4) along an application distance (19) by means of the application roller (7)
- peeling a protective strip (1d) off an adhesive surface (1c) of the self-adhesive profiled sealing element (1) prior to the application in a section of the conveying path (11) between the drive system (10) and the application roller (7),
- measuring the length of the profiled sealing element (1) drawn from the store by means of a measuring sensor (16) comprising a measuring roller (16a),
**characterized in that** the measuring roller (16a) rolls on the profiled sealing element (1) without slipping in a section of the conveying path (11) in conveying direction (11a) upstream of the drive system (10).

2. The method according to claim 1, **characterized in that**, upon termination of the application of the profiled sealing element along the application distance (19), the measured length of the profiled sealing element (1) drawn from the store is compared to a nominal length of the profiled sealing element (1) to be applied in the application distance (19), wherein a compression of the profiled sealing element (1) compared to the nominal length of the profiled sealing element (1) to be applied is at hand in the application distance (19), if the measured length is longer than the nominal length, and an elongation of the profiled sealing element (1) compared to the nominal length of the profiled sealing element (1) to be applied is at hand in the application distance (19), if the measured length is shorter than the nominal length.

3. The method according to claim 2, **characterized in that** the comparison is carried out in an automated manner, in particular by way of electronic data processing.

4. The method according to one of claims 1 to 3, **characterized in that** the profiled sealing element (1) is applied in one operation along a plurality of application distances (19) arranged downstream from one another.

5. The method according to one of claims 1 to 4, **characterized in that** the drive system (10) and the application roller (7) convey the profiled sealing element (1) in the same direction and with corresponding speed along the conveying path (11).

6. The method according to one of claims 1 to 5, **characterized in that** a compression of the profiled sealing element (1) between the drive system (10) and the application roller (7) is monitored with the help of a sensor (17), which detects a loop formation in the section of the conveying path (11) between the drive system (10) and the application roller (7).

7. The method according to claim 6, **characterized in that** the application of the profiled sealing element (1) is terminated immediately, provided that a compression of the profiled sealing element (1) is detected between the drive system (10) and the application roller (7).

8. The method according to one of claims 1 to 7, **characterized in that** the length of the profiled sealing element (1) drawn from the store is measured by means of the measuring roller at a conveying path distance of maximally 0.25 m upstream of the drive system (10).

9. The method according to one of claims 1 to 8, **characterized in that** the application occurs by rolling the profiled sealing element (1) onto an application surface (18) of the body or the body part (4) with the help of the application roller (7) along the application distance (19).

10. The method according to one of claims 1 to 9, **characterized in that** the measuring roller (16a) rolls on the protective strip (1c) of the profiled sealing element (1).

11. The method according to claim 10, **characterized in that** a knurled measuring roller (16a) is used.

12. A device (6) for carrying out the method according to one of claims 1 to 11, wherein
- the device (6) has an application head (8) comprising an application roller (7), which is set up to roll a profiled sealing element (1) comprising an adhesive surface (1c) to a body or a body part (4) of a vehicle,
- the application head (8) has a drive system (10), which is set up to draw the profiled sealing element (1) from a store and to convey the profiled sealing element along a conveying path (11) in the direction of the application roller (7),
- a peel-off for peeling a protective strip (1d) off the adhesive surface (1c) of the profiled sealing element (1) is arranged on the application head (8) along the conveying path (11) between the drive system (10) and the application roller (7),
**characterized in that**
- a measuring roller (16a) of a measuring sensor (16), which is set up in such a way that it rolls on the profiled sealing element (1) without slipping and measures the length of the profiled sealing element (1) drawn from the store, is arranged on the application head (8) in conveying direction (11a) of the profiled sealing element (1) upstream of the drive system (10).

13. The device according to claim 12, **characterized in that** the device (6) has a data processing unit, which is programmed to compare the measured length of the profiled sealing element (1) drawn from the store to a nominal length of the profiled sealing element to be applied in the application distance (19) after termination of the application of the profiled sealing element (1) along the application distance (19), wherein a compression of the profiled sealing element (1) compared to the nominal length of the profiled sealing element to be applied is at hand in the application distance (19), if the measured length is longer than the nominal length, and an elongation of the profiled sealing element (1) compared to the nominal length of the profiled sealing element to be applied, is at hand in the application distance (19), if the measured length is shorter than the nominal length.

14. The device according to claim 12 or 13, **characterized in that** the drive system (10) has two circumferential belts (10a, 10b), which can be attached to the surface of the profiled sealing element (1) in a frictionally engaged manner.

15. The device according to one of claims 12 to 14, **characterized in that** a sensor (17) is arranged in the section of the conveying path (11) between the drive system (10) and the application roller (7) in such a way that it can detect a loop formation of the profiled sealing element (1) associated with a compression of the profiled sealing element (1) between the drive system (10) and the application roller (7).

16. The device according to one of claims 12 to 15, **characterized in that** the measuring roller (16a) is arranged on the application head (8) in such a way that it is set up to roll on the protective strip (1d) of the profiled sealing element.

17. The device according to one of claims 12 to 16, **characterized in that** the measuring roller (16a) has a knurling (16e).

18. The device according to claim 17, **characterized in that** the knurling (16e) has a plurality of pointed teeth, which are set up to positively engage with the protective strip (1d) of the profiled sealing element (1).

19. The device according to one of claims 12 to 18, **characterized in that** a guide roller (16b) is arranged on the application head (8) at a distance to the measuring roller (16a) in such a way that the guide roller (16b) rolls on the side of the profiled sealing element (1) facing away from the protective strip (1d) and forms a counter bearing for the measuring roller (16a).

20. The device according to one of claims 12 to 19, **characterized in that** a drive (16d) acting in the direction of the profiled sealing element (1) can push the measuring roller (16a) against the profiled sealing element (1).

21. The device according to one of claims 12 to 18, **characterized in that** the drive system (10) and/or the application roller (7) comprise a servomotor.

## Revendications

1. Procédé destiné à déterminer l'extension et/ou le refoulement d'un profilé d'étanchéité (1) autocollant, appliqué sur une carrosserie ou sur une pièce de carrosserie (4) d'un véhicule, comportant les étapes :
- du retrait du profilé d'étanchéité (1) hors d'un accumulateur et du transport du profilé d'étanchéité (1) le long d'un trajet de transport (11) doté d'un système d'entraînement (10) dans la direction d'un rouleau d'application (7),
- de l'application du profilé d'étanchéité (1) à l'aide du rouleau d'application (7) sur la carrosserie ou sur la pièce de carrosserie (4) le long d'un tronçon d'application (19),
- du retrait d'un ruban protecteur (1d) d'une surface adhésive (1c) du profilé d'étanchéité (1) autocollant avant l'application dans un segment du trajet de transport (11) entre le système d'entraînement (10) et le rouleau d'application (7),
- de la mesure de la longueur du profilé d'étanchéité (1) retiré de l'accumulateur à l'aide d'un capteur de valeurs de mesure (16) comportant un rouleau de mesure (16a),
**caractérisé en ce que** sur un segment du trajet de transport (11) à l'avant du système d'entraînement (10) dans la direction de transport (11a), le rouleau de mesure (16a) roule sans patiner sur le profilé d'étanchéité (1).

2. Procédé selon la revendication 1, **caractérisé en ce qu'**après l'achèvement de l'application du profilé d'étanchéité le long du tronçon d'application (19), la longueur mesurée du profilé d'étanchéité (1) retiré de l'accumulateur est comparée avec une longueur de consigne du profilé d'étanchéité (1) qui doit être appliqué sur le tronçon d'application (19), sur le tronçon d'application étant présent un refoulement du profilé d'étanchéité (1) par rapport à la longueur de consigne du profilé d'étanchéité (1) qui doit être appliquée si la longueur mesurée est supérieure à la longueur de consigne et sur le tronçon d'application (19) étant présente une extension du profilé d'étanchéité (1) par rapport à la longueur de consigne du profilé d'étanchéité (1) qui doit être appliquée si la longueur mesurée est inférieure à la longueur de consigne.

3. Procédé selon la revendication 2, **caractérisé en ce que** la comparaison s'effectue de manière automatisée, notamment par voie de traitement électronique des données.

4. Procédé selon l'une quelconque des revendications 1 à 3, **caractérisé en ce que** le profilé d'étanchéité (1) est appliqué en une étape de travail le long de plusieurs tronçons d'application (19) placés les uns derrière les autres.

5. Procédé selon l'une quelconque des revendications 1 à 4, **caractérisé en ce que** le système d'entraînement (10) et le rouleau d'application (7) transportent le profilé d'étanchéité (1) le long du trajet de transport (11) dans la même direction et avec une vitesse correspondante.

6. Procédé selon l'une quelconque des revendications 1 à 5, **caractérisé en ce qu'**un refoulement du profilé d'étanchéité (1) entre le système d'entraînement (10) et le rouleau d'application (7) est surveillé à l'aide d'un capteur (17) qui détecte la formation d'une boucle dans le segment du trajet de transport (11) entre le système d'entraînement (10) et le rouleau d'application (7).

7. Procédé selon la revendication 6, **caractérisé en ce que** l'application du profilé d'étanchéité (1) prend fin immédiatement dès qu'un refoulement du profilé d'étanchéité (1) entre le système d'entraînement (10) et le rouleau d'application (7) est détecté.

8. Procédé selon l'une quelconque des revendications 1 à 7, **caractérisé en ce que** la mesure de la longueur du profilé d'étanchéité (1) retiré de l'accumulateur s'effectue à l'aide du rouleau de mesure à un écart sur le trajet de transport à l'avant du système d'entraînement (10) d'un maximum de 0,25 m.

9. Procédé selon l'une quelconque des revendications 1 à 8, **caractérisé en ce que** l'application s'effectue par déroulement du profilé d'étanchéité (1) sur une surface d'application (18) de la carrosserie ou de la pièce de carrosserie (4) à l'aide du rouleau d'application (7) le long du tronçon d'application (19).

10. Procédé selon l'une quelconque des revendications 1 à 9, **caractérisé en ce que** le rouleau de mesure (16a) roule sur le ruban protecteur (1c) du profilé d'étanchéité (1).

11. Procédé selon la revendication 10, **caractérisé en ce qu'**il est utilisé un rouleau de mesure (16a) moleté.

12. Dispositif (6) pour la réalisation du procédé selon l'une quelconque des revendications 1 à 11,
- le dispositif (6) comportant une tête d'application (8) avec un rouleau d'application (7) qui est conçue pour dérouler un profilé d'étanchéité (1) avec une surface adhésive (1c) sur une carrosserie ou une pièce de carrosserie (4) d'un véhicule,
- la tête d'application (8) comportant un système d'entraînement (10) qui est conçu pour retirer le profilé d'étanchéité (1) hors d'un accumulateur et pour transporter le profilé d'étanchéité le long d'un trajet de transport (11), en direction du rouleau d'application (7),
- sur la tête d'application (8), le long du trajet de transport (11) entre le système d'entraînement (10) et le rouleau d'application (7) étant placé un système de retrait pour retirer un ruban protecteur (1d) de la surface adhésive (1c) du profilé d'étanchéité (1)
**caractérisé en ce que**
- sur la tête d'application (8), à l'avant du système d'entraînement (10), dans la direction de transport (11a) du profilé d'étanchéité (1) est placé un rouleau de mesure (16a) d'un capteur de valeurs de mesure (16), qui est conçu de sorte à rouler sans patiner sur le profilé d'étanchéité (1) et qui mesure la longueur du profilé d'étanchéité (1) retiré hors de l'accumulateur.

13. Dispositif selon la revendication 12, **caractérisé en ce que** le dispositif (6) comporte une unité de traitement de données qui est programmée de sorte à comparer la longueur mesurée du profilé d'étanchéité (1) retiré hors de l'accumulateur avec une longueur de consigne pour le profilé d'étanchéité qui doit être appliqué sur le tronçon d'application (19), après l'achèvement de l'application du profilé d'étanchéité (1) le long du trajet d'application (19), sur le tronçon d'application (19) étant présent un refoulement du profilé d'étanchéité (1) par rapport à la longueur de consigne du profilé d'étanchéité qui doit être appliquée si la longueur mesurée est supérieure à la longueur de consigne et sur le tronçon d'application (19) étant présente une extension du profilé d'étanchéité (1) par rapport à la longueur de consigne du profilé d'étanchéité qui doit être appliquée si la longueur mesurée est inférieure à la longueur de consigne.

14. Dispositif selon la revendication 12 ou 13, **caractérisé en ce que** le système d'entraînement (10) comporte deux courroies (10a, 10b) périphériques qui peuvent être amenées en application par friction sur la surface du profilé d'étanchéité (1).

15. Dispositif selon l'une quelconque des revendications 12 à 14, **caractérisé en ce que** dans le segment du trajet de transport (11) entre le système d'entraînement (10) et le rouleau d'application (7), un capteur (17) est placé de telle sorte qu'il puisse détecter la formation d'une boucle par le profilé d'étanchéité (1) accompagnant un refoulement du profilé d'étanchéité (1) entre le système d'entraînement (10) et le rouleau d'application (7).

16. Dispositif selon l'une quelconque des revendications 12 à 15, **caractérisé en ce que** le rouleau de mesure (16a) est placé sur la tête d'application (8) de telle sorte qu'il soit conçu pour rouler sur le ruban protecteur (1d) du profilé d'étanchéité.

17. Dispositif selon l'une quelconque des revendications 12 à 16, **caractérisé en ce que** le rouleau de mesure (16a) comporte un moletage (16e).

18. Dispositif selon la revendication 17, **caractérisé en ce que** le moletage (16e) comporte une pluralité de dents pointues qui sont conçues pour un engagement par complémentarité de forme dans le ruban protecteur (1d) du profilé d'étanchéité (1).

19. Dispositif selon l'une quelconque des revendications 12 à 18, **caractérisé en ce qu'**à un écart par rapport au rouleau de mesure (16a), un galet de guidage (16b) est placé sur la tête d'application (8) de telle sorte que le galet de guidage (16b) roule sur le côté du profilé d'étanchéité (1) qui est opposé au ruban protecteur (1d) et forme une butée pour le rouleau de mesure (16a).

20. Dispositif selon l'une quelconque des revendications 12 à 19, **caractérisé en ce que** le rouleau de mesure (16a) peut être poussé contre le profilé d'étanchéité (1) par un entraînement (16d) agissant dans la direction du profilé d'étanchéité (1).

21. Dispositif selon l'une quelconque des revendications 12 à 18, **caractérisé en ce que** le système d'entraînement (10) et/ou le rouleau d'application (7) comportent un servomoteur.
